# EUROPÄISCHE PATENTSCHRIFT

(11) **EP 1 321 218 B1**
(45) Veröffentlichungstag und Bekanntmachung des Hinweises auf die Patenterteilung: **07.02.2007**
(21) Anmeldenummer: 02027084.9
(22) Anmeldetag: 03.12.2002
(51) Int. Cl.: B23K 35/38, B23K 103/18

(54) **Verfahren zum Fügen artverschiedener Verbindungen unter Schutzgas**
Method for joining dissimilar materials in shielding gas
Procédé pour lier des matériaux différents sous gaz protecteur

(30) Priorität: 20.12.2001 DE 10162937
(43) Veröffentlichungstag der Anmeldung: 25.06.2003
(73) Patentinhaber: Linde Aktiengesellschaft, 65189 Wiesbaden (DE)
(72) Erfinder: Miklos, Ernst, 82327 Tutzing (DE); Tischler, Friedrich, 4650 Lambach (AT)
(74) Vertreter: Kasseckert, Rainer

(56) Entgegenhaltungen:
- EP-A- 0 494 521
- EP-A- 0 639 423
- WO-A-00/24545
- WO-A-94/07642
- WO-A-94/13428
- GB-A- 999 350
- GB-A- 1 378 091

## Beschreibung

Die Erfindung betrifft ein Verfahren zum Fügen einer artverschiedenen Verbindungen aus zwei unterschiedlichen Werkstoffen mit einem Lichtbogen unter Schutzgas, wobei nur einer der beiden Werkstoffe aufgeschmolzen wird, und die Verwendung eines Schutzgases dazu.

In der industriellen Anwendung hat sich das Schweißen zum Verbinden von metallischen Werkstücken seit langem etabliert. Beim Schweißen werden die zu verbindenden Werkstücke aufgeschmolzen. Beim Metall-Schutzgas-Schweißen brennt ein Lichtbogen in einem Schutzgasmantel. Zum Lichtbogen-Schweißen mit abschmelzender Elektrode zählen das Metall-Inertgas-Schweißen (MIG-Schweißen) und das Metall-Aktivgas-Schweißen (MAG-Schweißen) sowie mit nicht abschmelzender Elektrode das Wolfram-Inertgas-Schweißen (WIG-Schweißen). Ferner stellt das Wolfram-Plasma-Schweißen (WP-Schweißen) eine zusätzliche Verfahrensvariante des Lichtbogen-Schweißens unter Schutzgas mit nicht abschmelzender Elektrode dar. Desweiteren sind Hybridverfahren bekannt. Die zum Schweißen erforderlichen Anlagen und Geräte sind in Fachkreisen wohlbekannt. Schutzgasmischungen zum Schweißen mit Lichtbogen existieren in zahlreichen verschiedenen Mischungen, wobei die einzelnen Mischungen für das jeweilige Schweißverfahren und den Werkstoff optimiert sind. Geachtet wird hierbei auf einen stabilen Lichtbogen, eine qualitativ hochwertige Schweißnaht, auf das Vermeiden von Poren und Schweißspritzern und eine hohe Verarbeitungsgeschwindigkeit.

Die EP 639 423 beinhaltet das Lichtbogenschweißen von Aluminiumwerkstoffen mit dotierten Schutzgasen (100 bis 1000 vpm Kohlendioxid und/oder Sauerstoff, die WO 00/24545 das Löten mit Lichtbogen und 0,2 bis 1,2 Vol.-% Sauerstoff in Argon, die WO 94/13428 das Lichtbogenschweißen mit 80 bis 250 vpm N₂O/N₂ in Argon oder Argon/Helium und die EP 494521 das Lichtbogenschweißen von Stählen und nickel- und kobaltbasierten Werkstoffen mit 0,1 bis 0,9 Vol.-% Kohlendioxid, 5 bis 13 Vol.-% Helium und Argon. Die GB 1378091 beinhaltet das Verbinden von Kupfer mit Stahl mit Lichtbogen und einer Schutzgasmischung aus 0,4 bis 0,6 Vol.-% Sauerstoff und Argon. Das Verbinden von Aluminiumwerkstoffen mit Stählen mit Lichtbogen ist in der WO 94/07642 offenbart, wobei hier das Schutzgas einen Sauerstoffeintritt aus der Umgebung verhindert und das Schutzgas im Wesentlichen aus Argon, Helium, Stickstoff, Kohlendioxid und geringen Spuren von Sauerstoff besteht.

Aber trotz der Fülle der inzwischen entwickelten und zur Verfügung stehenden Schweißverfahren mit Varianten ergeben sich beim Lichtbogen-Schweißen oft Probleme, die auf die hohen Temperaturen zurückzuführen sind, welche beim Schweißen erreicht werden. Diese hohen Temperaturen sind notwendig, damit das zu bearbeitende Werkstück aufgeschmolzen wird. So bringt beispielsweise das Schweißen von verzinkten, aluminierten oder anderweitig beschichteter Werkstücke Probleme mit sich, da beim Verbinden von verzinkten Blechen aufgrund des niedrigen Zink-Verdampfungspunkt Gase entstehen, die zu Instabilitäten des Lichtbogens führen und welche für Poren und Schweißspritzer verantwortlich sind. Deshalb wird als effiziente und auch kostengünstige Alternative zu herkömmlichen Schweißtechniken das Löten eingesetzt.

Als Löten wird ein thermisches Verfahren zum stoffschlüssigen Fügen von Werkstoffen bezeichnet, wobei eine flüssige Phase durch Schmelzen eines Lotes (Lot-Zusatzwerkstoff) entsteht. Beim Löten wird im Gegensatz zum Schweißen die Solidustemperatur der zu verbindenden Werkstücke nicht erreicht. Zu nennen sind hierzu die verschiedenen Lichtbogen-Löt-Verfahren MIG, MAG, WIG sowie das Plasma- und das Plasma-MIG-Löten und hybride Lötverfahren. Bei den Hartlötverfahren, weiche mit Lichtbogen und unter Schutzgas arbeiten, werden die Lötverbindung unter Einsatz von Schutzgasschweißgeräten hergestellt. Dabei wird jedoch nicht der Grundwerkstoff aufgeschmolzen, sondern nur die sog. Hart- bzw. Hochtemperaturlote, welche als Zusatzwerkstoffe verwendet werden. Die eingesetzten Lotwerkstoffe besitzen verhältnismäßig niedrige Schmelzpunkte in der Größenordnung von etwa 1000°C. Als Lotwerkstoffe werden häufig Bronzedrähte eingesetzt, welche aus Kupferbasislegierungen mit unterschiedlichen Legierungselementen wie z.B. Aluminium, Silizium oder Zinn bestehen.

Um Lichtbogeninstabilitäten, welche beim Löten mit Lichtbogen auftreten, zu vermeiden und daraus resultierende Qualitätseinbußen zu unterbinden, wird in der EP 1 101 559 eine Aktivgaskomponente in das Schutzgas zugegeben. Mit der dort vorgeschlagenen Schutzgasmischung, welche aus Inertgasen mit Kohlendioxid oder Sauerstoff im vpm-Bereich (Bereich unterhalb von 1 Vol.-%) besteht, werden für metallische Werkstoffe qualitativ hochwertige Lotverbindungen erreicht. Dies gilt auch für Nichteisen-Metalle sowie für beschichtete Werkstücke.

Mit Hilfe des Lötens können auch Verbindungen aus unterschiedlichen artverschiedenen Materialien hergestellt werden, wobei auch hier die vorgenannten Vorteile des Lötens gelten. Zu beachten ist dabei, dass nur der Zusatzwerkstoff - also das Lot - nicht aber die Werkstoffe aufgeschmolzen wird. Schmelzen hingegen (sofern dies aufgrund der unterschiedlichen Schmelzpunkte der Werkstoffe überhaupt möglich ist) beide Werkstoffe und der Zusatzwerkstoff entsteht ein gemeinsames Schmelzbad und die Verbindung entsteht durch Schweißen und nicht durch Löten. Bei unterschiedlichen Werkstoffen ist jedoch noch ein weiteres Verfahren möglich. Da die Energieeinbringung so gewählt werden kann, dass nur eines der beiden Werkstücke und der Zusatzwerkstoff (sofern ein Zusatzwerkstoff verwendet wird, was normalerweise üblich ist) aufschmilzt, während das zweite Werkstück nur erwärmt, nicht jedoch geschmolzen wird, handelt es sich bei dem Fügevorgang um eine Mischform aus Schweißen und Löten. Diese Mischform, bei welcher das Schmelzbad aus dem Material mit niedrigerem Schmelzpunkt und Lot-Zusatzwerkstoff gebildet wird und das Material mit dem höheren Schmelzpunkt lediglich erwärmt, nicht jedoch geschmolzen wird, ist ausschließlich beim Fügen von artverschiedenen Verbindungen möglich, da ja die beiden Werkstücke unterschiedliche Schmelztemperaturen haben müssen. Die dabei entstehenden Verbindungen zeigen folglich einen Doppelcharackter aus Schweißen und Löten. Das Fügen erfolgt mit den vom Lichtbogen-Schweißen bekannten Verfahren, wie beispielsweise WIG oder MAG.

Beim Fügen von artverschiedenen Verbindungen treten nun besondere Probleme auf, da sowohl das Verfahren selbst als auch die beiden unterschiedlichen Werkstoffe unterschiedliche Schutzgase verlangen und auch der Lot-Zusatzwerkstoff spezielle Anforderungen stellt. Das Schutzgas muss einen stabilen Fügeprozess gewährleisten und dabei auf die Eigenschaften der beiden verschiedenartigen Verbindungskomponenten abgestimmt sein. Die Forderungen der beiden Materialien können dabei durchaus entgegen gesetzt sein. Die Verbindung muss jedoch trotzdem qualitativ hochwertig sein und insbesondere das Entstehen von Poren muss unterbunden werden. Auch ein Spritzen von Lot und Werkstoff muss vermieden werden.

Der Erfindung liegt daher die Aufgabe zugrunde, ein Verfahren aufzuzeigen, welches das Fügen von Werkstücken aus artverschiedenen Materialien erlaubt. Die Werkstoffe unterscheiden sich dabei in der Temperatur ihres Schmelzpunkts, so dass das Fügen eine Mischform des Schweißens und des Lötens ist. Dabei müssen die vorgenannten Probleme gelöst werden.

Diese Aufgabe wird gemäß Anspruch 1 dadurch gelöst, dass Aluminium oder eine Aluminiumlegierung mit Stahl oder beschichtetem Stahl verfügt wird und das Schutzgas zumindest eine Aktivgaskomponente enthält, wobei als Aktivgaskomponente eines der Gase oder ein Gemisch aus den Gasen O₂, CO₂, NO, N₂O oder N₂ eingesetzt wird und der Aktivgasanteil von 0,005 bis 0,1 Vol.-% (50 bis 1000 vpm) beträgt. Durch die Verwendung einer Aktivgaskomponente wird der Lichtbogen stabilisiert. Ein stabiler Lichtbogen ist beim Fügen unerlässlich, da ein unruhiger Prozess zu Poren in der Verbindung führt und die Verbindungsnaht qualitativ minderwertig wird. Eine Aktivgaskomponente verhindert nun die Instabilitäten, welche aufgrund des Aufschmelzens des einen Werkstoffs entstehen. Der Anteil der Aktivgaskomponente im Schutzgas muss mindestens so hoch gewählt werden, dass die Stabilität des Lichtbogens gewährleistet ist. Andererseits wird der Anteil zu hohen Volumenanteilen dadurch beschränkt, dass das aktive Gas nur in vernachlässigbarer Weise metallurgisch mit den zu verbindenden Werkstoffen reagiert, da die Qualität der Verbindung nicht beeinträchtigt werden darf.

Das Schutzgas weist einen Aktivgasanteil von 0,005 bis 0,1 Vol.-% (50 bis 1000 vpm) auf. In diesem Bereich ist sichergestellt, dass einerseits die metallurgischen Einflüsse auf die Materialien sehr gering sind und anderseits der Lichtbogen ausreichend stabilisiert wird. Darüber hinaus wird das Tropfenverhalten des Lots positiv beeinflusst.

Gemäß der Erfindung werden Aluminium oder Aluminiumlegierungen verfügt. Bei diesen Materialien führen Aktivgase im vpm-Bereich zu optisch hochwertigen Verbindungen und auch Materialspritzer werden wirkungsvoll unterdrückt. Außerdem eignen sich Aluminium und seine Legierungen in hervorragender Weise zum Fügen, da sie einen im Vergleich zu anderen Metallen sehr tiefen Schmelzpunkt haben. Sie stellen bei Verbindungen mit anderen, bei höheren Temperaturen schmelzenden Metallen den Verbindungspartner dar, welcher beim Fügen aufschmilzt. Aufgrund des Anteils des Aktivgases im vpm-Bereich ist jedoch die metallurgische Reaktion des Aluminiums/der Aluminiumlegierungen, insbesondere die Oxidation, zu vernachlässigen.

Weiterhin wird gemäß der Erfindung Stahl oder beschichteter Stahl verfügt. Da bei Stahl der Lichtbogen nur durch Zugabe eines aktiven Gases stabil gehalten werden kann, ist die erfindungsgemäße Zugabe unabdingbar. Stahl, beschichtet oder unbeschichtet, schmilzt bei verhältnismäßig hohen Temperaturen und ist der Verbindungspartner, welcher beim Fügen nur erwärmt, nicht jedoch geschmolzen wird.

Folglich zeigt das erfindungsgemäße Verfahren seine besonderen Vorteile beim Fügen von Aluminium oder Aluminiumlegierungen mit Stahl oder beschichtetem Stahl.

Als Aktivgaskomponente wird bei diesem erfindungsgemäßen Verfahren als Schutzgas eines der Gase oder ein Gemisch aus den Gasen O₂, CO₂, NO, N₂O oder N₂ eingesetzt. Diese Gas eignen sich aufgrund ihres Sauerstoff- bzw. Stickstoffanteils in hervorragender Weise als Aktivgas.

Bewährt hat sich hierzu in besonderer Weise 0,01 bis 0,07 Vol.-% (100 bis 700 vpm) Sauerstoff im Schutzgas.

In Weiterbildung der Erfindung enthält das Schutzgas zwischen 5 und 50 Vol.-%, vorzugsweise zwischen 10 und 30 Vol.-%, Helium. Der Heliumanteil verbessert das Benetzungsverhalten des flüssigen Lots, indem es die Temperatur auf der Oberfläche erhöht. Darüber hinaus führt der Heliumanteil zu einer Verbesserung beim Entgasen der Schmelze, da es für einen effektiven Transfer der Wärme von Lichtbogen in die Schmelze sorgt. Eine Reaktion des Heliums mit dem Lot oder Werkstoff findet jedoch nicht statt, da Helium inert ist.

In Ausgestaltung der Erfindung enthält das Schutzgas Argon. Argon als preiswertes Inertgas schützt den Fügevorgang wirkungsvoll vor der Umgebung.

Ferner wird die Aufgabe gelöst durch die Verwendung eines Schutzgases zum Fügen einer artverschiedenen Verbindungen aus zwei unterschiedlichen Werkstoffen mit einem Lichtbogen unter Schutzgas, wobei nur einer der beiden Werkstoffe aufgeschmolzen wird, wobei Aluminium oder eine Aluminiumlegierung den Verbindungspartner darstellt, welcher beim Fügen aufschmilzt, und Stahl oder beschichteter Stahl der Verbindungspartner ist, welcher beim Fügen nur erwärmt, nicht jedoch geschmolzen wird,wobei das Schutzgas Argon und/oder Helium und als Aktivgas 0,005 bis 0,1 Vol.-% (50 bis 1000 vpm) O₂, CO₂, NO, N₂O oder N₂ oder eine Gemisch aus diesen Gasen enthält. Das Inertgas schützt die Fügeverbindung vor der Atmosphäre und das Aktivgas beeinflusst den Prozess in vorteilhafter Weise. Der Anteil im vpm-Bereich sichert auf der einen Seite die Stabilität des Lichtbogens und auf der anderen Seite werden metallurgische Reaktionen weitgehend unterbunden.

Mit besonderen, weiter oben genannten Vorteilen enthält das Schutzgas zwischen 5 und 50 Vol.-%, vorzugsweise zwischen 10 und 30 Vol.-%, Helium.

Als ein erfindungsgemäßes Schutzgas mit Aktivgas mit besonderem Vorteil beim Fügen von artverschiedenen Verbindungen hat sich 0,01 bis 0,07 Vol.-% (100 bis 700 vpm) Sauerstoff erwiesen.

Im folgendem soll die Erfindung nun anhand dreier Beispiele näher erläutert werden.

In Beispiel 1 wird ein Schutzgas bestehend aus 30 Vol.-% Helium mit 500 vpm (0,05 Vol.-%) Sauerstoff und Argon im verbleibenden Volumen zum Lichtbogen-Fügen eines Bleches aus Aluminium mit einem zinkbeschichteten Stahlblech verwendet. Als Lotzusatzwerkstoff wird ein Bronzedraht mit Aluminiumanteil benutzt. Der Fügevorgang wird nach dem WIG oder MIG Verfahren durchgeführt. Die Naht weist keinerlei Poren auf und ist optisch exzellent. Die Verbindung zeigt - auch auf der Seite des Aluminiums - keinerlei Hinweise einer Oxidation und ist von hoher Güte.

Zum Fügen eines Werkstücks aus Aluminium mit einem zweiten aus Stahl wird gemäß Beispiel 2 ein Schutzgas aus 1000 vpm (0,1 Vol.-%) N₂O und 15 Vol.-% Helium und Argon verwendet und als Lot eine Aluminium-Bronze. Beim Fügen schmilzt das Aluminium und das Lot, während der Stahl nur erwärmt wird. Hier zeigt sich ein sehr stabiler Lichtbogen. Die Verbindung ist porenfrei und qualitativ hochwertig. Anzeichen von metallurgischen Einflüssen finden sich nicht.

In Beispiel 3 wird das Fügen von einer Aluminiumlegierung mit Stahl beschrieben. Das Fügen erfolgt nach dem WIG Verfahren. Dabei wird der Stahl erwärmt und die Aluminiumlegierung schmilzt auf. Auch das Lot, eine Bronze, wird aufgeschmolzen. Als Schutzgas wird eine Mischung aus 30 Vol.-% Helium, 100 vpm (0,01 Vol.-%) NO und Argon verwendet. Die so entstehende artverschiedene Verbindung ist von hoher Qualität.

Mit dem erfindungsgemäßen Verfahren wird es so möglich, qualitativ hochwertige Verbindungen zwischen artverschiedenen Werkstoffen herzustellen.

## Patentansprüche

1. Verfahren zum Fügen einer artverschiedenen Verbindungen aus zwei unterschiedlichen Werkstoffen mit einem Lichtbogen unter Schutzgas,
wobei nur einer der beiden Werkstoffe aufgeschmolzen wird,
wobei Aluminium oder eine Aluminiumlegierung den Verbindungspartner darstellt, welcher beim Fügen aufschmilzt, und Stahl oder beschichteter Stahl der Verbindungspartner ist, welcher beim Fügen nur erwärmt, nicht jedoch geschmolzen wird,
und wobei das Schutzgas zumindest eine Aktivgaskomponente enthält,
wobei als Aktivgaskomponente eines der Gase oder ein Gemisch aus den Gasen O₂, CO₂, NO, N₂O oder N₂ eingesetzt wird und der Aktivgasanteil von 0,005 bis 0,1 Vol.-% (50 bis 1000 vpm) beträgt.

2. Verfahren nachAnspruch 1, **dadurch gekennzeichnet, dass** das Schutzgas 0,01 bis 0,07 Vol.-% (100 bis 700 vpm) O₂ aufweist.

3. Verfahren nach Anspruch 1 oder 2, **dadurch gekennzeichnet, dass** das Schutzgas zwischen 5 und 50 Vol.-%, vorzugsweise zwischen 10 und 30 Vol.-%, Helium enthält.

4. Verfahren nach einem der Ansprüche 1 bis 3, **dadurch gekennzeichnet, dass** das Schutzgas Argon enthält.

5. Verwendung eines Schutzgases zum Fügen einer artverschiedenen Verbindungen aus zwei unterschiedlichen Werkstoffen mit einem Lichtbogen unter Schutzgas,
wobei nur einer der beiden Werkstoffe aufgeschmolzen wird, wobei Aluminium oder eine Aluminiumlegierung den Verbindungspartner darstellt, welcher beim Fügen aufschmilzt, und Stahl oder beschichteter Stahl der Verbindungspartner ist, welcher beim Fügen nur erwärmt, nicht jedoch geschmolzen wird,
wobei das Schutzgas Argon und/oder Helium und als Aktivgas 0,005 bis 0,1 Vol.-% (50 bis 1000 vpm) O₂ CO₂, NO, N₂O oder N₂ oder eine Gemisch aus diesen Gasen enthält.

6. Verwendung eine Schutzgases nach Anspruch5, **dadurch gekennzeichnet, dass** das Schutzgas zwischen 5 und 50 Vol.-%, vorzugsweise zwischen 10 und 30 Vol.-%, Helium enthält.

7. Verwendung eines Schutzgases nachAnspruch 5 oder 6, **dadurch gekennzeichnet, dass** das Schutzgas 0,01 bis 0,07 Vol.-% (100 bis 700 vpm) O₂ aufweist.

## Claims

1. Method for joining dissimilar components comprising two different materials with an arc under shielding gas, wherein only one of the two materials is melted, wherein the component partner which melts during joining is aluminium or an aluminium alloy, and the component partner which is only heated but not melted during joining is steel or coated steel, and wherein the shielding gas contains at least one active gas component, with the active gas component being one of the gases O₂, CO₂, NO, N₂O or N₂ or a mixture thereof and the active gas proportion is of from 0.005 to 0.1% by volume (50 to 1000 vpm).

2. Method according to Claim 1, **characterized in that** the shielding gas comprises 0.01 to 0.07% by volume (100 to 700 vpm) of O₂.

3. Method according to Claim 1 or 2, **characterized in that** the shielding gas contains between 5 and 50% by volume, preferably between 10 and 30% by volume of helium.

4. Method according to one of Claims 1 to 3, **characterized in that** the shielding gas contains argon.

5. Use of a shielding gas for joining dissimilar components comprising two different materials with an arc under shielding gas, wherein only one of the two materials is melted, wherein the component partner which melts during joining is aluminium or an aluminium alloy, and the component partner which is only heated but not melted during joining is steel or coated steel, with the shielding gas comprising argon and/or helium and 0.005 to 0.1 % by volume (50 to 1000 vpm) O₂, CO₂, NO, N₂O or N₂ or a mixture of these gases as active gas.

6. Use of a shielding gas according to Claim 5, **characterized in that** the shielding gas contains between 5 and 50% by volume, preferably between 10 and 30% by volume of helium.

7. Use of a shielding gas according to Claim 5 or 6, **characterized in that** the shielding gas comprises 0.01 to 0.07 % by volume (100 to 700 vpm) of O₂.

## Revendications

1. Procédé pour relier des matériaux de natures différentes, constitués de deux matériaux différents, à l'aide d'un arc lumineux et sous gaz de protection,
dans lequel seul l'un des deux matériaux est fondu,
l'aluminium ou un alliage d'aluminium formant le partenaire de liaison qui fond lors de la liaison et l'acier ou de l'acier revêtu étant le partenaire de liaison qui lors de la jonction s'échauffe sans être fondu,
le gaz de protection contenant au moins un composant gazeux actif, le composant gazeux actif utilisé étant un gaz ou un mélange de gaz sélectionnés parmi O₂, CO₂, NO, N₂O ou N₂, la teneur en gaz actif étant comprise entre 0,005 et 0,1 % en volume (50 à 1 000 vpm).

2. Procédé selon la revendication 1, **caractérisé en ce que** le gaz de protection présente de 0,01 à 0,07 % en volume (100 à 700 vpm) d'O₂.

3. Procédé selon les revendications 1 ou 2, **caractérisé en ce que** le gaz de protection contient entre 5 et 50 % en volume et de préférence entre 10 et 30 % en volume d'hélium.

4. Procédé selon l'une des revendications 1 à 3, **caractérisé en ce que** le gaz de protection contient de l'argon.

5. Utilisation d'un gaz de protection pour relier des matériaux de natures différentes à l'aide d'un arc lumineux et sous gaz de protection,
dans lequel seul l'un des deux matériaux est fondu,
l'aluminium ou un alliage d'aluminium formant le partenaire de liaison qui fond lors de la liaison et l'acier ou de l'acier revêtu étant le partenaire de liaison qui lors de la jonction s'échauffe sans être fondu,
le gaz de protection contenant de l'argon et/ou de l'hélium et comme gaz actif de 0,005 à 0,1 % en volume (50 à 1 000 vpm) O₂, CO₂, NO, N₂O ou N₂ ou un mélange de ces gaz.

6. Utilisation d'un gaz de protection selon la revendication 5, **caractérisée en ce que** le gaz de protection contient entre 5 et 50 % en volume et de préférence entre 10 et 30 % en volume d'hélium.

7. Utilisation d'un gaz de protection selon les revendications 5 ou 6, **caractérisée en ce que** le gaz de protection présente de 0,01 à 0,07 % en volume (100 à 700 vpm) d'O₂.
